# EUROPÄISCHE PATENTSCHRIFT

(11) **EP 2 978 911 B1**
(45) Veröffentlichungstag und Bekanntmachung des Hinweises auf die Patenterteilung: **16.06.2021**
(21) Anmeldenummer: 14722529.6
(22) Anmeldetag: 27.03.2014
(51) Int. Cl.: E04G 5/04, F16B 13/14

(54) **BAUANORDNUNG UND VERFAHREN ZUM FESTLEGEN EINES GERÜSTS AN EINER GEBÄUDEWAND**
DEVICE, ASSEMBLY AND METHOD FOR FIXING A SCAFFOLD TO A FAÇADE AND METHOD FOR MANUFACTURING THE DEVICE
DISPOSITIF, SYSTÈME DE CONSTRUCTION ET PROCÉDÉ DE FIXATION D'UN CADRE À UNE FAÇADE, AINSI QUE PROCÉDÉ DE FABRICATION DU DISPOSITIF

(30) Priorität: 27.03.2013 DE 102013103172; 27.03.2013 DE 202013101353 U
(43) Veröffentlichungstag der Anmeldung: 03.02.2016
(73) Patentinhaber: WE Group GmbH & Co. KG, 49685 Emstek (DE)
(72) Erfinder: WESSENDORF, Franz, 49685 Emstek (DE)
(74) Vertreter: Wickord, Wiro
(86) Internationale Anmeldenummer: PCT/DE2014/100105
(87) Internationale Veröffentlichungsnummer: WO 2014/154207

(56) Entgegenhaltungen:
- DE-A1- 2 908 405
- DE-U1- 7 905 976
- DE-U1- 8 304 713
- DE-U1- 29 721 364
- GB-A- 2 245 673
- GB-A- 2 413 164
- JP-A- 2005 314 881

## Beschreibung

Die Erfindung betrifft eine Bauanordnung nach dem Oberbegriff des Patentanspruchs 1. Des Weiteren betrifft die Erfindung ein Verfahren nach dem Oberbegriff des Patentanspruchs 18.

Um Arbeiten an einer Fassade eines Gebäudes oder eines anderen Bauwerks sicher, schnell und im Einklang mit den geltenden Arbeitsschutzrichtlinien durchführen zu können, wird in vielen Fällen ein Gerüst vorzusehen sein, welches Handwerkern den Zugang zu der Fassade auch in großer Höhe gewährleistet und zugleich Standsicherheit und Bewegungsfreiheit ermöglicht. Üblicherweise wird das Gerüst an einer die Fassade aufweisenden Gebäudewand abgestützt beziehungsweise festgelegt. Über lange Zeit war es hierbei üblich, eine Ausnehmung, insbesondere eine Bohrung, in die Gebäudewand einzubringen und mittels eines in die Bohrung eingesetzten Dübels eine Ringschraube an der Gebäudewand festzulegen. Die Ringschraube wurde hierzu mit einem Gewindeabschnitt derselben in den Dübel eingedreht. Ein Kopf der Ringschraube mit einer Öse verbleibt außerhalb der Fassade. Anschließend wird ein Verbindungselement des Gerüsts, insbesondere ein Verbindungshaken, in die Öse der Ringschraube eingesetzt. Hierdurch gelingt es, das Gerüst über die Ringschraube relativ zu der Gebäudewand festzulegen.

Zu Problemen mit dem über viele Jahre erprobten und bewährten Verfahren kann es kommen, wenn beispielsweise bei einer Fassadenaußendämmung das Gerüst in einem Abstand von bis zu 30 cm oder mehr an der Gebäudewand aufgebaut wird, sodass die Außendämmung zwischen Gebäudewand und Gerüst angebaut werden kann. In diesem Fall muss zwischen dem Gewindeabschnitt und dem Kopf der Ringschraube ein vergleichsweise langer Schaft vorgesehen werden. Sofern über den Kopf beim Aufbau des Gerüsts oder bei den Arbeiten an der Fassade Querkräfte in die Ringschraube eingeleitet werden, kann sich diese plastisch verformen und insbesondere verbiegen. Wird die verbogene Ringschraube dann nach der Herstellung der Fassade entfernt, bildet sich in der gerade neu hergestellten Fassade eine unnötig große, insbesondere trichterförmige Ausnehmung, welche selbst bei einem nachträglichen Verschließen vom Betrachter dauerhaft wahrgenommen und als störend empfunden wird.

Insbesondere beim Aufbau von Wärmedämmverbundsystemen oder anderen Außendämmungen ist man insofern bestrebt, neue Lösungen für die Gerüstverankerung zu finden. Beispielsweise ist eine Befestigungsvorrichtung bekannt, bei der zur Ausbildung eines Verbindungspunkts zwischen Gerüst und Gebäudewand zunächst zwei zueinander beabstandete und aus der Gebäudewand im Wesentlichen senkrecht abragende Gewindestifte vorgesehen werden, welche jeweils über Dübel oder andere geeignete Haltemittel an der Gebäudewand festgelegt sind. Zwischen den Gewindestiften wird dann eine insbesondere aus einem Lochblech gefertigte Verbindungstraverse vorgesehen. In die Ausnehmungen der Verbindungstraverse greift dann der an dem Gerüst vorgesehene Verbindungshaken ein. Hierbei können Querkräfte über die seitlich versetzt angeordneten Gewindestifte wesentlich besser an der Gebäudewand abgestützt werden, als dies mit einer einzelnen, über einen Dübel in der Gebäudewand festgelegten Ringschraube der Fall ist. Darüber hinaus erlaubt die Verbindungstraverse mit den verschiedenen Ausnehmungen einen Lage- beziehungsweise Toleranzausgleich. Infolge dieses Ausgleichs gestaltet sich die Verbindung des Gerüsts mit der Befestigungsvorrichtung flexibel, sodass insbesondere durch Lagetoleranzen bedingte Querkräfte vermieden beziehungsweise reduziert werden können. Jedoch ist der Aufbau des Systems aufwendig, da zwei Ausnehmungen in der Gebäudewand vorzusehen sind.

Aus der Gebrauchsmusterschrift DE 83 04 713 U1 ist bekannt, an der Gebäudewand einen sogenannten permanenten Fassadenanker vorzusehen, welcher über eine Verschraubung an der Gebäudewand festgelegt wird. Der Fassadenanker verfügt hierbei über einen sich im Montagezustand parallel zu der Gebäudewand erstreckenden Anlegeabschnitt mit einer Anlagefläche, welche benachbart zu der Verschraubung an der Gebäudewand anliegt. Ferner ist eine Hülse, insbesondere eine Gewindehülse, vorgesehen zur Aufnahme einer Ringschraube. Die Ringschraube dient hierbei wie gehabt zur Verbindung von Gebäudewand und Gerüst. Zwischen der Hülse und dem Anlageabschnitt ist ein Stützabschnitt vorgesehen. Insbesondere ist bekannt, dass der Stützabschnitt durch eine dreieckige Formplatte beziehungsweise rippenartig zwischen der Hülse und dem Anlageabschnitt vorgesehene Streben definiert ist. Über die Ringschraube in den Fassadenanker eingeleitete Kräfte stützen sich insofern über die Hülse und dem Stützabschnitt an dem Anlageabschnitt und damit an der Gebäudewand selbst ab. Da zur Realisierung einer ausreichenden Stabilität der Fassadenanker vorzugsweise aus Stahl gefertigt ist und der Fassadenanker dauerhaft in der Fassade verbleibt, ist jedoch ausgerechnet in der zur Wärmedämmung vorgesehenen äußeren Dämmschicht eine Kältebrücke gebildet, welche die Effizienz der Außendämmung signifikant reduziert.

Aus der DE 10 2011 107 954 A1 ist ein Fassadenanker bekannt, welcher mehrteilig ausgebildet ist. Ein Zentralkörper mit einer durchgehenden Längsausnehmung wird hierbei mit einer Anlagefläche an der Gebäudewand angesetzt. Durch die Längsausnehmung wird eine Ringschraube oder ein anderes Befestigungsmittel für das Gerüst geführt. Die Schraube wird über einen separaten Dübel in einer Ausnehmung der Gebäudewand festgelegt. An dem Zentralkörper sind beispielsweise Versteifungsrippen vorgesehen, welche eines hohes Maß an Stabilität bieten und dazu dienen, auf die Schraube wirkende Querkräfte aufzunehmen beziehungsweise abzustützen.

Aus der EP 2 525 107 A1 ist ein weiterer Fassadenanker mit einem im Wesentlichen kegelstumpfförmigen Grundkörper bekannt. Der Gerüstanker sieht gegenüberliegend zwei im Querschnitt kreisförmige Grenzflächen als Stirnseiten des Kegelstumpfs vor. Zwischen den zwei Grenzflächen erstreckt sich ein zylindrischer Abschnitt mit radial abragenden Rippen. Des Weiteren ist an dem Gerüstanker konzentrisch eine Durchgangsbohrung vorgesehen, welche sind von einer ersten Stirnseite bis zu einer gegenüberliegenden zweiten Stirnseite erstreckt. In die Durchgangsbohrung wird einseitig ein Verbindungsmittel zum Festlegen des Gerüstankers an der Gebäudewand eingesetzt. Auf der gegenüberliegenden Seite kann eine Ringschraube oder ein anderes Befestigungsmittel festgelegt werden zum Verbinden des Fassadenankers mit dem zu sichernden Gerüst. Der Fassadenanker wird insbesondere mit der eben ausgebildeten, kreisförmigen Stirnseite an die Gebäudewand angesetzt und verbleibt nach dem Herstellen der Fassade, insbesondere nach dem Anbringen der Dämmung in der Fassade.

Aus der DE 297 21 364 U1 ist ein Fassadenanker mit einer schlagregendichten Abdeckung bekannt. Der Fassadenanker ist mehrteilig ausgeführt und geeignet, permanent Bauelemente wie Markisen, Briefkastenanlagen, Leuchtreklamen, Außenbeleuchtungen beziehungsweise Vordächer an einer ein Wärmedämmverbundsystem aufweisenden Fassade zu applizieren.

Aus der GB 2 413 164 A ist eine Bauanordnung bekannt, bei der ein Ausgleichskissen zwischen einer zum Verankern des Fassadenankers vorgesehenen Mauer und einer Stützplatte des Ankers angeordnet ist. Das Kissen wird hierbei beim Festlegen der Stützplatte verformt und ist so bemessen, dass es im verbauten Zustand das Anlageelement randseitig überragt.

Aus der GB 2 245 673 A ist ein mehrteiliger Fassadenanker bekannt, der eine zugleich als Spreizelement für den Anker wirkende Hülse mit einem Innengewinde vorsieht. In die Hülse wird eine mit einem Außengewinde versehene Ringschraube eingesetzt. Die Anwendung dient beispielsweise zum Festlegen eines Gerüsts.

Eine gattungsgemäße Bauanordnung ist aus der JP 2005 314881 A bekannt. Offenbart ist insbesondere ein zweiteiliger Anker mit einer längserstreckten, mutterartig gestalteten Hülse und einem plattenförmigen Anlageelement, welches eine im verbauten Zustand einer Wand zugewandte Stützfläche vorsieht. Eine Verankerung der Anordnung in der Wand erfolgt während des Wandaufbaues. Die Realisierung erfolgt so, dass die Verankerung für den Anker dauerhaft in der Wand verbleibt und der Anker selbst bedarfsgerecht an die Verankerung angebaut wird, um beispielsweise über den mehrteiligen Anker ein Gerüst an der Wand festzulegen.

Aufgabe der vorliegenden Erfindung ist es insofern, verbesserte Möglichkeiten zur sicheren und schnellen Festlegung eines Gerüsts an einer Gebäudewand anzugeben. Um insbesondere den Sicherheitsanforderungen Rechnung zu tragen, soll die Festlegung in statisch bestimmter Weise beziehungsweise berechenbar erfolgen.

Zur Lösung der Aufgabe weist die Erfindung die Merkmale des Patentanspruchs 1 auf.

Der besondere Vorteil der Erfindung ist, dass aufgrund des Vorsehens der Ausgleichsmasse sichergestellt werden kann, dass der Fassadenanker flächig an der Gebäudewand anliegt. Die flächige Anlage des Ankers an der Gebäudewand ist Voraussetzung dafür, dass die Kräfte im Bereich des Anlageabschnitts beziehungsweise über die Anlagefläche verteilt an der Gebäudewand abgestützt werden können. Insofern ist das Vorsehen der Ausgleichsmasse zwingende Voraussetzung dafür, die Kräfteverhältnisse am Fassadenanker beziehungsweise die in Bezug auf die Festlegung des Fassadenankers an der Gebäudewand auftretenden Kräfte berechnen zu können. Da jede reale Gebäudewand Unebenheiten aufweisen wird, kann beim Verzicht auf die Ausgleichsmasse eine flächige Anlage des Fassadenankers an der Gebäudewand nicht sichergestellt werden. Es kann somit zu einer lediglich lokalen, im Extremfall punktförmigen Abstützung des Fassadenankers an der Gebäudewand kommen. Hierbei können unzulässig hohe Kräfte auftreten und im Extremfall die Gebäudewand beziehungsweise der Fassadenanker beschädigt werden.

Nach einer bevorzugten Ausführungsform der Erfindung wird die Ausgleichsmasse aus einem aushärtbaren Material gebildet. Insbesondere kann die Ausgleichsmasse aus einem bruchstabilen Material gebildet sein. Beispielsweise können zwei Materialkomponenten bereitgestellt werden für die Ausgleichsmasse. Vorteilhaft kann durch das Vorsehen eines aushärtbaren Materials während der Montage die flächige Anlage des Fassadenankers an der Gebäudewand hergestellt werden, solange die Ausgleichsmasse noch nicht ausgehärtet ist. Sobald die Ausgleichsmasse ausgehärtet ist, können dann über den Fassadenanker eingeleitete und an der Gebäudewand abzustützende Kräfte übertragen werden. Als Ausgleichsmasse im Sinne der Erfindung können beispielsweise 2-Komponenten-Klebstoffe oder mineralische Werkstoffe dienen, welche selbstaushärtend ausgeführt sind. Beispielsweise kann Zement oder ein anderer mineralischer Werkstoff vorgesehen werden. Insbesondere kann die Ausgleichsmasse druckstabil ausgebildet sein und Druckkräfte in definierter Weise bevorzugt ohne unzulässige große Verformungen übertragen.

Nach der Erfindung ist an dem Fassadenanker eine Hülse vorgesehen, welche langgestreckt und im Wesentlichen senkrecht zu der Stützfläche orientiert ist. Die Hülse weist die Aufnahme für das Befestigungsmittel auf. Im Bereich eines freien Endbereichs der Hülse und kann insbesondere eine Mantelfläche vorgesehen sein, welche von einem elastischen Körper und insbesondere von einem Körper mit veränderbaren Volumen beziehungsweise variablen Außenabmessungen umgeben ist. Der elastische Körper dient insbesondere als Dichtkörper und kann beispielweise nach Art eines Elastomerrings ausgebildet sein. Vorteilhaft erlaubt das Vorsehen des elastischen Körpers eine Abdichtung des Fassadenankers zu den Dämmplatten. Durch das Vorsehen des elastischen Körpers kann ein Restspalt zwischen dem Fassadenanker und den Dämmplatten ausgefüllt werden, sodass der Eintritt von Feuchtigkeit in die Fassade vermieden und letztlich der Beschädigung der Fassade vorgebeugt wird. Beispielsweise kann der elastische Körper bei der Montage des Fassadenankers komprimiert sein und einen geringen Außendurchmesser aufweisen. Die Kompression kann beispielsweise durch eine Papierhülse, welche den elastischen Körper mantelseitig umgibt, realisiert werden. Sobald die Fassade ausgebildet ist und ein Spalt zwischen Fassade und Fassadenanker vorliegt, kann die Papierhülse entfernt werden. Der elastische Körper expandiert dann und dichtet den Fassadenanker zur Fassade, indem der Spalt geschlossen wird.

Nach der Erfindung ragen im Bereich eines Stützabschnitts der Hülse von derselben Stützrippen ab. Insbesondere ragen die Stützrippen radial von der Hülse ab. Freie Randkanten der Stützrippen können jedenfalls abschnittsweise messerklingenartig ausgebildet sein mit einer sich in Richtung der Randkante verjüngenden Dickenabmessung. Vorteilhaft vereinfacht sich das Anbringen der Dämmung durch das Vorsehen der messerklingenartig ausgebildeten Randkanten. Die Dämmplatten, welche typischerweise aus einem Kunststoffmaterial hergestellt sind, können vom Handwerker vor Ort an der Baustelle an den Fassadenanker angedrückt werden. Die Stützrippen schneiden sich aufgrund der messerklingenartigen Randkanten selbsttätig in die Dämmplatte ein, sodass eine vollständige Verkleidung des Fassadenankers mit dem Dämmmaterial gewährleistet werden kann. Die Ausbildung der Dämmung erfolgt hierdurch gleichermaßen schnell und vollständig.

Während aufgrund des Vorsehens der messenklingenartigen Randkanten die Dämmplatten in besonders einfacher Weise an die Stützrippen angelegt werden können, kann es abhängig vom Dämmmaterial und von einem Außendurchmesser der Hülse des Ankers geboten sein, an dem Dämmmaterial eine Ausnehmung für die Hülse anzuarbeiten. Es kann beispielsweise eine halbkreisförmige Ausnehmung randseitig an den Dämmplatten ausgebildet werden, indem Dämmmaterial mit einer Feile beziehungsweise Raspel entfernt wird oder indem die Dämmplatte mit einem heißen Metallfaden geschnitten wird. Es kann beispielsweise eine Bohrung entsprechend des Außendurchmessers der Hülse an der Dämmplatte vorgesehen und die Dämmplatte in die Längsrichtung auf den Anker aufgedrückt werden.

Nach einer Weiterbildung der Erfindung ist zum Festlegen des Fassadenankers an der Gebäudewand ein Spreizelement vorgesehen, welches in die Ausnehmung einsetzbar ist. Das Befestigungsmittel ist insbesondere in das Spreizelement und in die Aufnahme des Fassadenankers eingesetzt zum Festlegen desselben an der Gebäudewand. Vorteilhaft kann durch das Vorsehen des Spreizelements eine sichere und schnelle Festlegung des Fassadenankers an der Gebäudewand erreicht werden. Unabhängig vom Aushärten der Ausgleichsmasse ist der Fassadenanker über das Spreizelement an der Gebäudewand festgelegt. Das Spreizelement dient insofern dazu, den Fassadenanker festzulegen in der Zeit, in der die Ausgleichsmasse noch nicht ausgehärtet ist. Das Spreizelement bietet insofern eine Grundsicherung.

Beispielsweise kann das Spreizelement unmittelbar Teil des Fassadenankers sein. Beispielsweise kann das Spreizelement einstückig mit der Hülse oder einen die Stützfläche aufweisenden Anlegeabschnitt ausgebildet sein. Beispielsweise kann das Spreizelement separat ausgeführt sein. Das Spreizelement ist dann nicht Teil des Fassadenankers. Insbesondere können handelsübliche Dübel als Spreizelement Verwendung finden.

Zum Festlegen des Befestigungsmittels beziehungsweise des Spreizelements an der Gebäudewand kann vorgesehen sein, dass in die Ausnehmung die Ausgleichsmasse oder ein anderes aushärtbares Material eingebracht wird. Beispielsweise kann ein Klebstoff in die Ausnehmung eingesetzt werden. Das Spreizelement kann dann zusammen mit der Ausgleichsmasse oder dem anderen aushärtbaren Material das Befestigungsmittel in der Ausnehmung festlegen.

Das Vorsehen des Spreizelements ist optional. Es kann nach der Erfindung beispielsweise auf ein Spreizelement verzichtet werden. Das Befestigungsmittel, welches in die Ausnehmung eingesetzt wird, kann beispielsweise in der Ausnehmung verklebt werden.

Nach der Erfindung ist der Fassadenanker mehrteilig ausgebildet. Insbesondere können die Hülse mit den Stützrippen, das Anlageelement mit der Stützfläche und das Spreizelement als separate Bauteile ausgeführt sein. Vorteilhaft können die separaten Bauteile individuell und beanspruchsgerecht gestaltet werden. In einfacher Weise können die verschiedenen Bauteile aus unterschiedlichen Werkstoffen hergestellt werden. Beispielsweise kann das Anlageelement aus Stahl hergestellt werden, während das Spreizelement aus Kunststoff hergestellt ist. Die Hülse mit den Stützrippen kann beispielsweise als ein Mehrkomponentenkunststoffbauteil ausgebildet sein. Für den freien Endbereich kann insbesondere ein weicher, gut schneidbarer Kunststoff verwendet werden, während ansonsten ein hartes beziehungsweise widerstandsfähiges Material, beispielsweise glasfaserverstärkter Kunststoff verwendet wird. Das Vorsehen der Hülse aus Kunststoff gewährleistet zum einen, dass in der Fassade keine Wärmebrücken ausgebildet sind, wie dies insbesondere bei Fassadenankern aus metallischen Materialien der Fall ist. Darüber hinaus kann durch die Verwendung des schneidbaren Kunststoffs im freien Endbereich ein Zuschneiden beziehungsweise Einlängen des Fassadenankers in einfacher Weise realisiert werden. Demgegenüber kann durch das Vorsehen eines faserverstärkten Kunststoffs im Bereich des Stützabschnitts sichergestellt werden, dass der Fassadenanker belastungsgerecht konstruiert ist und die abzustützenden Kräfte nicht zu einer Beschädigung des Fassadenankers, der Gebäudewand oder der neu zu fertigenden Fassade führen.

Als Spreizelement kann beispielsweise ein handelsüblicher Dübel verwendet werden, welcher in großen Stückzahlen kostengünstig bereitgestellt wird.

Nach einer Weiterbildung der Erfindung dient der Fassadenanker der Aufnahme einer Ringschraube. Beispielsweise dient die Ringschraube als Verbindungsmittel zum Festlegen des Gerüsts am Fassadenanker. Hierzu wird insbesondere ein mit einem Gewindeabschnitt der Ringschraube in die Aufnahme des Fassadenankers geführt. Die Festlegung des Gerüsts an der Ringschraube erfolgt im Bereich des Ringkopfs. Insbesondere ist im Bereich des Ringkopfs eine Öse gebildet, in die das Gerüst beziehungsweise eine Verankerung des Gerüsts eingesetzt werden kann.

Die Ringschraube kann optional zugleich als Befestigungsmittel zum Festlegen des Fassadenankers an der Fassadenwand vorgesehen werden. In diesem Fall wird der Schaft der Ringschraube durch die Aufnahme des Fassadenankers bis in den Bereich der Ausnehmung geführt. Dort wird mittels der Ringschraube das Spreizelement gespreizt, sodass der Fassadenanker über das Spreizelement an der Gebäudewand festgelegt ist.

Zur Lösung der Aufgabe weist die Erfindung die Merkmale des unabhängigen Patentanspruchs 18 auf.

Der besondere Vorteil der Erfindung besteht darin, dass durch das Aufbringen der Ausgleichsmasse in einfacher Weise dafür Sorge getragen werden kann, dass der Fassadenanker mit der gesamten Stützfläche jedenfalls mittelbar an der Fassadenwand angelegt ist und die Kräfte über die Stützfläche in die Gebäudewand eingeleitet werden. Da die Gebäudewand üblicherweise uneben ausgebildet ist, ermöglicht erst das Vorsehen der Ausgleichsmasse die flächige Anlage. Bei Verzicht auf die Ausgleichsmasse besteht die Gefahr, dass die Stützfläche lediglich lokal und im Extremfall nur punktweise an der Gebäudewand anliegt. In diesem Fall können die abzustützenden Kräfte zu unzulässig hohen lokalen Lastspitzen führen, welche letztlich zu einer Beschädigung des Fassadenankers oder zu dessen Ausfall führen.

Nach einer Weiterbildung der Erfindung wird die Ausgleichsmasse zusätzlich in die Ausnehmung eingebracht. Vorteilhaft wirkt die Ausgleichsmasse in diesem Fall nach Art einer Verklebung für das in die Ausnehmung eingesetzte Spreizelement beziehungsweise das in der Ausnehmung vorgesehene Befestigungsmittel. Die Ausgleichsmasse sorgt für eine zusätzliche Stabilität beim Festlegen des Fassadenankers an der Gebäudewand. Dies gilt insbesondere, wenn die Ausgleichsmasse nach Art eines Klebstoffs, beispielsweise nach Art eines 2-Komponenten-Klebstoffs, ausgebildet ist.

Nach einer Weiterbildung der Erfindung wird in die Aufnahme des Fassadenankers eine Ringschraube als Verbindungsmittel zum Festlegen des Gerüsts eingesetzt. Insbesondere kann vorgesehen sein, dass mittels des Verbindungsmittels zugleich der Fassadenanker an der Gebäudewand festgelegt wird. Das Verbindungsmittel dient dann zugleich als Befestigungsmittel für den Fassadenanker. Beispielsweise kann als Verbindungsmittel eine Ringschraube vorgesehen werden, welche durch den Fassadenanker bis in die Ausnehmung geführt wird. Die Festlegung des Gerüsts erfolgt insbesondere im Bereich der Öse der Ringschraube.

Nach der Erfindung wird zur Herstellung der Fassade eine Dämmung flächig an die Gebäudewand angesetzt, wobei eine Dicke der Dämmung relativ zu einer Längserstreckung des Fassadenankers so gewählt ist, dass der Fassadenanker mit einen der Stützfläche abgewandten freien Endbereich desselben aus der Dämmung herausragt. Vorteilhaft kann durch das Herausführen des Fassadenankers aus der Dämmung eine auf der Dämmung aufgebrachte mineralische Außenschicht bis unmittelbar an den Anker herangeführt werden. Eine in dem Anker vorgesehene Ringschraube ist hierbei vor Verschmutzung durch den sie umgebenden freien Randbereich des Fassadenankers geschützt. Es wird insofern verhindert, dass die Ringschraube mit der Außenschicht verklebt wird und die gerade neu hergestellte Außenschicht beim Entfernen der Ringschraube aus dem Fassadenanker beschädigt wird.

Nach einer Weiterbildung der Erfindung ist vorgesehen, dass beim Rückbau des Gerüsts die Ringschraube aus der Aufnahme des Fassadenankers entfernt wird und der Fassadenanker durch Zuschneiden des freien Endbereichs flächenbündig mit der mineralischen Außenschicht eingekürzt wird. Vorteilhaft kann durch das Einkürzen des Fassadenankers nach dem Herstellen der Außenschicht das optische Erscheinungsbild der Fassade verbessert werden. Insbesondere kann ein Verschlusskörper in die Aufnahme des Fassadenankers eingesetzt werden, sodass die Aufnahme des Fassadenankers verschlossen ist. Der Verschlusskörper kann beispielsweise optisch der Fassadengestaltung angepasst sein.

Aus den weiteren Unteransprüchen und der nachfolgenden Beschreibung sind weitere Vorteile, Merkmale und Einzelheiten der Erfindung zu entnehmen. Dort erwähnte Merkmale können jeweils einzeln für sich oder auch in beliebiger Kombination erfindungswesentlich sein. Erfindungsgemäß beschriebene Merkmale und Details der Bauanordnung gelten selbstverständlich auch im Zusammenhang mit dem erfindungsgemäßen Verfahren und umgekehrt. So kann auf die Offenbarung zu den einzelnen Erfindungsaspekten stets wechselseitig Bezug genommen werden. Die Zeichnungen dienen lediglich beispielhaft der Klarstellung der Erfindung und haben keinen einschränkenden Charakter.

Es zeigen:
- Figur 1: eine stirnseitige Aufsicht auf eine erste Ausführungsform eines Fassadenanker zum Festlegen eines Gerüsts an einer Gebäudewand,
- Figur 2: eine Schnittdarstellung des Fassadenankers gemäß Figur 1 nach dem Schnitt A-A,
- Figur 3: eine Aufsicht auf eine den Fassadenanker gemäß Figur 1 aufweisende Fassade,
- Figur 4: eine Schnittdarstellung der Fassade gemäß Figur 3 nach dem Schnitt B-B,
- Figur 5: den in der Fassade nach Figur 3 vorgesehenen Fassadenanker mit einem hierin festgelegten Verschlusselement,
- Figur 6: eine Seitenansicht einer zweiten Ausführungsform des Fassadenankers zum Festlegen des Gerüsts an der Fassade,
- Figur 7: eine perspektivische Ansicht einer dritten Ausführungsform des Fassadenankers mit einer hierin vorgesehenen Ringschraube,
- Figur 8: eine Hülse des Fassadenankers nach Figur 7 mit von der Hülse radial abragenden Stützrippen in einer perspektivischen Ansicht,
- Figur 9: die Hülse gemäß Figur 8 mit den Stützrippen in einer Aufsicht,
- Figur 10: einen in der Hülse vorgesehenen Gewindeeinsatz,
- Figur 11: ein Anlageelement des Fassadenankers nach Figur 7 in einer perspektivischen Ansicht und
- Figur 12: eine Schnittdarstellung einer erfindungsgemäßen Bauanordnung mit dem Fassadenanker nach Figur 7.

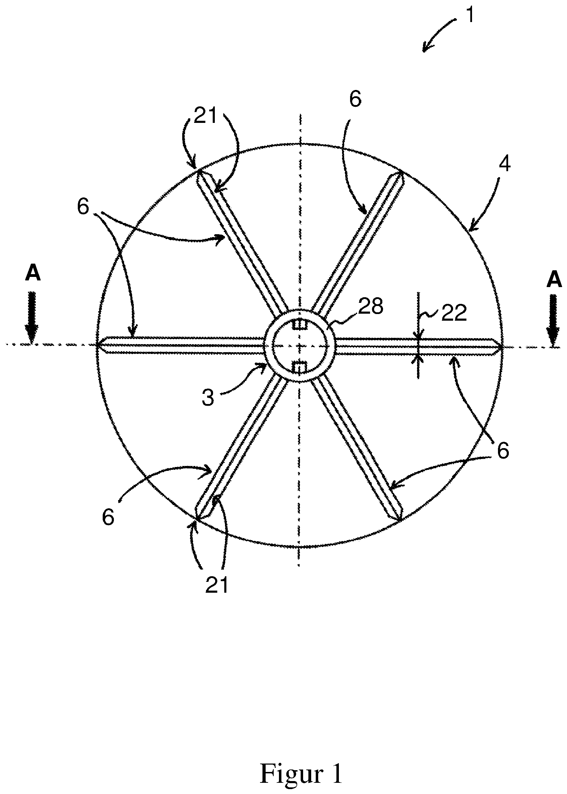

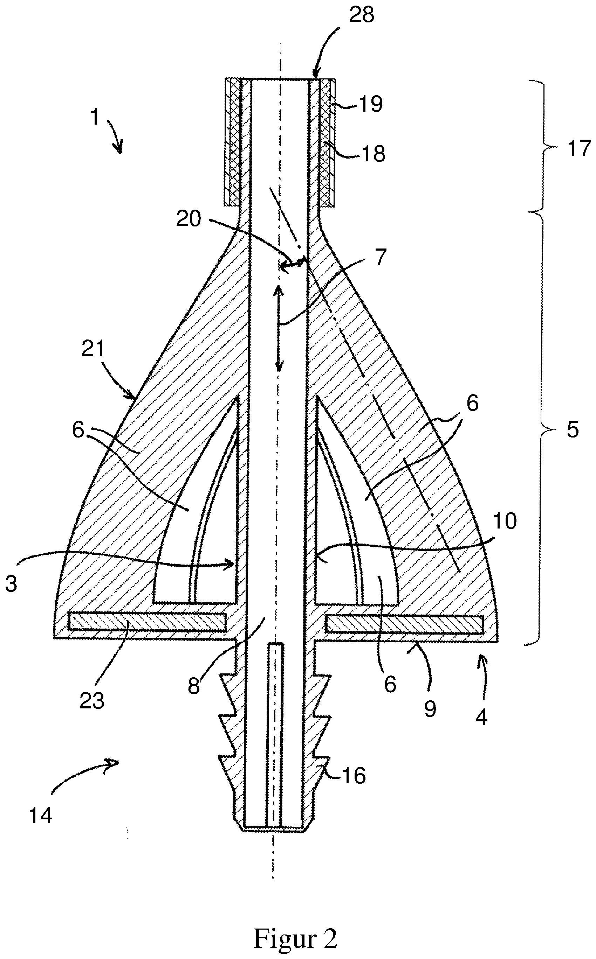

Ein Fassadenanker 1 zum Festlegen eines Gerüsts an einer Gebäudewand 2 nach den Figuren 1 und 2 weist als wesentliche Bestandteile eine Hülse 3, ein Anlageelement 4 und eine Mehrzahl von Stützrippen 6 auf, welche im Bereich eines Stützabschnitts 5 der Hülse 3 radial von derselben abragen. Die Hülse 3 ist in eine Erstreckungsrichtung 7 des Fassadenankers 1 lang erstreckt und dünnwandig ausgebildet. In die Erstreckungsrichtung 7 erstreckt sich eine zylindrische Aufnahme 8 der Hülse 3. Das Anlageelement 4 ragt in radialer Richtung von der Hülse 3 ab. An dem Anlageelement 4 ist eine eben ausgebildete und senkrecht zu der Erstreckungsrichtung 7 orientierte Stützfläche 9 vorgesehen. Der Stützabschnitt 5 weist die an einer äußeren Mantelfläche 10 der Hülse 3 regelmäßig verteilt angeordneten Stützrippen 6 als Stützelemente auf. Die Stützrippen 6 sind strebenartig zwischen dem Anlageelement 4 und der Hülse 3 vorgesehen.

Der Fassadenanker 1 wird beispielsweise verwendet, um ein Gerüst an einer Gebäudewand 2 festzulegen und Arbeiten an einer Fassade durchzuführen. Zu diesem Zweck wird an der Gebäudewand 2 mittels des Fassadenankers 1 eine Ringschraube 11 festgelegt. Eine von der Gebäudewand 2 entfernte Öse 12 der Ringschraube 11 dient dann dazu, dass Gerüst mit der Gebäudewand 2 zu verbinden. Sobald das Gerüst steht und sicher an der Gebäudewand 2 befestigt ist, können die Arbeiten an der Fassade beginnen. Insbesondere kann der Fassadenanker 1 zur Anwendung kommen, wenn an der Gebäudewand 2 eine Außendämmung aufgebaut wird. Beispielsweise kann der Fassadenanker 1 als permanenter Fassadenanker 1 für ein Wärmedämmverbundsystem vorgesehen werden, wobei der Fassadenanker 1 nach dem Aufbau des Wärmedämmverbundsystems dauerhaft in der Fassade verbleibt.

Die dünnwandige Hülse 3 mit der Aufnahme 8 kann entsprechend ihrer funktionalen Beschaffenheit in zwei Bereiche aufgeteilt werden. Der Stützabschnitt 5 wird durch die Stützrippen 6 definiert. An den Stützabschnitt 5 schließt sich in Erstreckungsrichtung 7 endseitig ein freier Endbereich 17 an. Der freie Endbereich 17 dient als ein Ausgleichsbereich für den Fassadenanker 1. Er ist dem Stützabschnitt 5 auf einer dem Anlageelement 4 gegenüberliegenden Seite zugeordnet. In dem freien Endbereich 17 ist die Hülse 3 im Wesentlichen zylindrisch ausgebildet. Die Mantelfläche 10 der Hülse 3 ist in dem Ausgleichsbereich 17 von einem Elastomerring 18 umgeben. Der Elastomerring 18 ist als kompressibler Elastomerring 18 ausgebildet und in der dargestellten Ausgangskonfiguration in radialer Richtung komprimiert. Die Kompression des Elastomerrings 18 wird durch eine den Elastomerring 18 mantelseitig umgebene Papierhülse 19 bewirkt.

Auf einer dem freien Endbereich 17 gegenüberliegenden Seite sieht der Fassadenanker 1 ein Spreizelement 14 vor, welches nach Art eines Dübels ausgebildet ist. Das Spreizelement 14 wird bei der Montage des Fassadenankers in einer an der Gebäudewand 2 vorgesehenen Ausnehmung 15 eingesetzt. Das Spreizelement 14 ist nach Art eines Dübels ausgebildet und weist am Umfang mantelseitig radial abragende widerhakenähnliche Ausformungen 16 auf.

Nach der vorliegenden Ausführungsform des Fassadenankers ist das Spreizelement 14 als integraler Teil des Fassadenankers 1 ausgebildet. Es ist einstückig insbesondere mit der Hülse 3 realisiert.

Das Anlageelement 4 schließt sich an den Stützabschnitt 5 des Fassadenankers 1 so an, dass die Stützfläche 9 des Anlageelements 4 unmittelbar benachbart zu dem Spreizelement 14 des Fassadenankers 1 vorgesehen ist. Auf einer der Stützfläche 9 gegenüberliegenden Seite schließt sich der Stützabschnitt 5 der Hülse 3 mit den Stützrippen 6 an das Anlageelement 4 an. Das Anlageelement 4 ist ebenso wie das Spreizelement 14 einstückig an die Hülse 3 angeformt. Das plattenförmige Anlageelement 4 ragt radial von der Hülse 3 ab. Das Anlageelement 4 weist dabei eine kreisförmige Grundfläche auf.

Die Stützrippen 6 sind ebenfalls mantelseitig an die Hülse 3 angeformt. Sie erstrecken sich unter einem Winkel 20 von zirka 30° zur Erstreckungsrichtung 7 zwischen einem äußeren Randbereich des Anlageelements 4 in Richtung der Hülse 3. Die Stützrippen 6 sind dabei nach Art von Streben aufgebaut und angeordnet.

Freie Randkanten 21 der Stützrippen 6 sind messerklingenartig ausgebildet, wobei sich eine Dickenabmessung 22 der Stützrippen 6 in Richtung der Randkanten 21 reduziert. Die Messerklingenform der Randkanten 21 erlaubt es, Dämmmaterial in Form von Dämmplatten 29 beim Ausbilden der Dämmfassade und beim Verkleiden des Fassadenankers 1 zu verwenden. Die Dämmplatte 29 wird hierzu gegen die messerklingenartig geformten Randkanten 21 der Stützrippen 6 gedrückt. Die Stützrippen 6 schneiden sich infolge der Messerklingenform ihrer Randkanten 21 und des Anpressdrucks in das Dämmmaterial. Die Dämmplatte 29 kann insofern unmittelbar an den Fassadenanker 1 angelegt werden mit der Folge, die Gebäudewand 2 auch im Bereich des Fassadenankers 1 in einfacher Weise vollständig gedämmt werden kann.

Nach einer alternativen, nicht dargestellten Ausführungsform der Erfindung können die Randkanten 21 eine einseitige Keilform aufweisen und sich schräg zwischen einer ersten Flachseite der Stützrippen 6 und einer gegenüberliegenden zweiten Flachseite der Stützrippen 6 erstrecken. Ebenso kann auf das Vorsehen einer Messerklingenform der Randkanten 21 verzichtet werden. Die Randkanten 21 können insofern beispielsweise stumpf oder abgerundet ausgebildet sein. Abhängig von der Dickenabmessung 22 der Stützrippen 6 kann die Dämmplatte 29 gleichwohl an dem Fassadenanker 1 angedrückt werden, oder es kann vorgesehen sein, dass an der Dämmplatte 29 eine entsprechende Nut für die Aufnahme der Stützrippen 6 vorgesehen wird.

Die Hülse 3 mit dem Stützabschnitt 5 und dem angeformten Anlageelement 4 kann beispielsweise mittels Kunststoffspritzgießens hergestellt und einstückig ausgeführt werden. Insbesondere kann zur Verbesserung der Festigkeit und Stabilität des Fassadenankers 1 ein ummantelter Kern 23, insbesondere ein kreisringförmiger Stahlkern 23, in dem Anlageabschnitt 4 vorgesehen werden. Der Kern 23 erstreckt sich wie das Anlageelement 4 radial in Bezug auf die Hülse 3 und senkrecht zu der Erstreckungsrichtung 7.

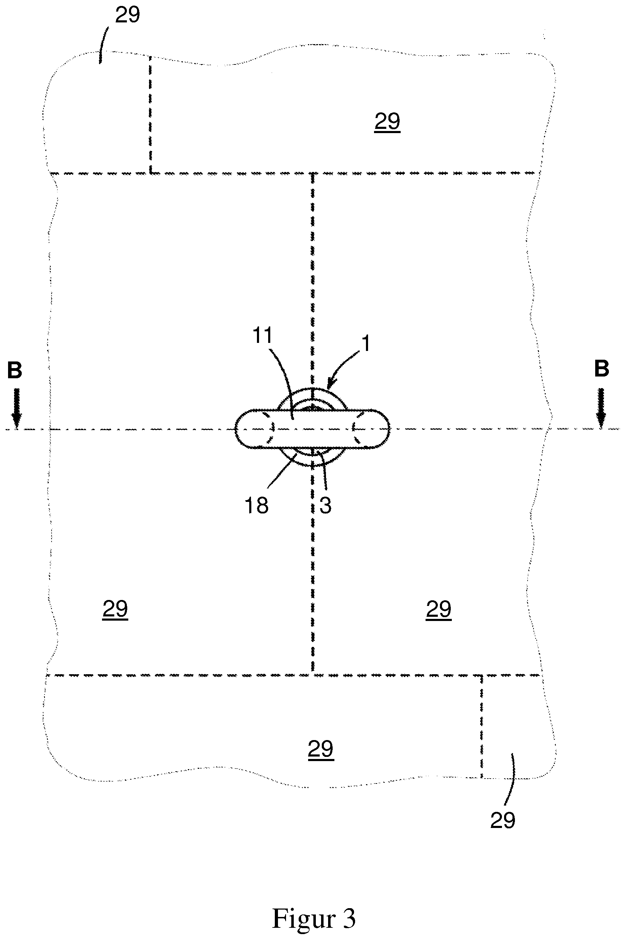

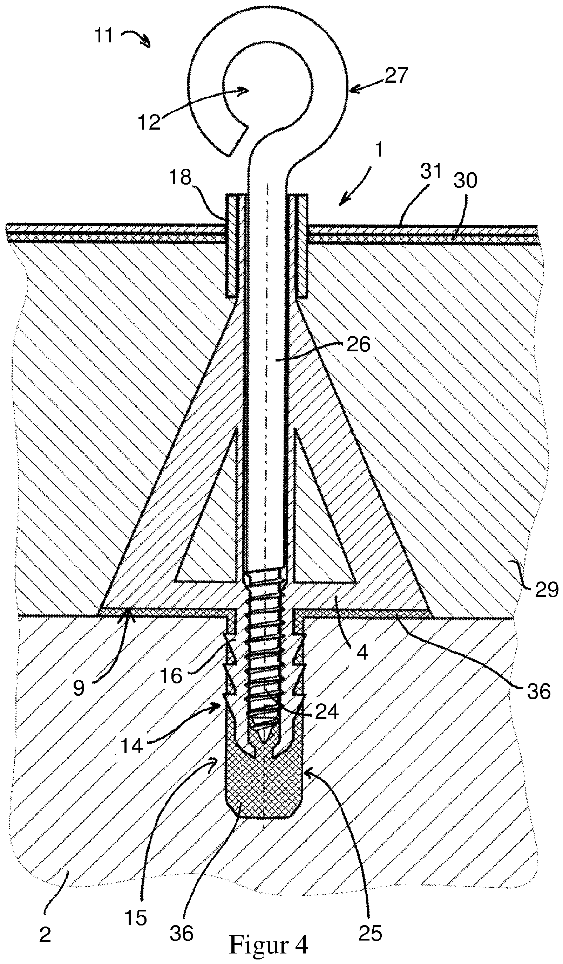

Eine Bauanordnung mit dem Fassadenanker 1 in einer Einbausituation ist in den Figuren 3 und 4 dargestellt. Der Fassadenanker 1 ist mit dem Spreizelement 14 in eine Ausnehmung 15 eingesetzt. Zugleich stützt sich der Fassadenanker 1 mit der Stützfläche 9 des Anlageelements 4 an der Gebäudewand 2 flächig ab. In eine als Längsausnehmung realisierte Aufnahme 8 des Fassadenankers 1 ist eine Ringschraube 11 eingesetzt. Die Ringschraube 11 spreizt mit einem Gewindeabschnitt 24 derselben das Spreizelement 14 derartig, dass die widerhakenförmigen Ausformungen 16 den Fassadenanker 1 an einer Wandung 25 der Ausnehmung 15 festlegen.

Zur weiteren Verbesserung der Festlegung des Fassadenankers 1 an der Gebäudewand 2 sind zwischen der Wandung 25 der Ausnehmung 15 einerseits und dem Spreizelement 14 andererseits sowie zwischen der Stützfläche 9 des Fassadenankers 1 und der Gebäudewand 2 eine Ausgleichsmasse 36 ausgebildet. Die Ausgleichsmasse 36 wird vorzugsweise durch einen selbst aushärtenden Klebstoff beziehungsweise einen 2-Komponenten-Klebstoff realisiert. Die Ausgleichsmasse 36 gewährleistet, dass der Fassadenanker 1 auch ohne eingedrehte Ringschraube 11 an der Gebäudewand 2 gehalten wird.

Die Ausgleichsmasse 36 ist ferner vorgesehen zwischen der an dem Anlageelement 4 vorgesehenen Stützfläche 9 des Fassadenankers 1 sowie der Gebäudewand 2. Die Ausgleichsmasse 36 dient hier insbesondere zum Ausgleich von Unebenheiten an der Gebäudewand 2. Die Ausgleichsmasse 36 ist notwendig, um eine vollflächige Anlage der Stützfläche 9 an der Gebäudewand 2 zu erreichen und die über den Fassadenanker 1 abgestützten Kräfte definiert in die Gebäudewand 2 einzuleiten. Die Ausgleichsmasse 36 sollte in diesem Zusammenhang insbesondere ausgebildet sein zur Aufnahme von Druckkräften.

Ein Schaft 26 der Ringschraube 11 erstreckt sich in die Erstreckungsrichtung 7 und verbindet den Gewindeabschnitt 24 der Ringschraube 11 mit einem die Öse 12 aufweisenden Ringkopf 27 der Ringschraube 11. Der Schaft 26 erstreckt sich hierbei in dem Stützabschnitt 5 und in dem freien Endbereich 17 der Hülse 3. Er ragt über eine Stirnfläche 28 des freien Endbereichs 17 hinaus.

Aus einer Mehrzahl von Dämmplatten 29 wird die Dämmung der Gebäudewand 2 aufgebaut. Die Dämmplatten 29 werden beispielsweise mit der Gebäudewand 2 flächig verklebt und auf einer der Gebäudewand 2 abgewandten Flachseite mit einer Gewebeschicht 30 und einer mineralischen Außenschicht 31 als äußerer Fassadenoberfläche überzogen.

Der Fassadenanker 1 ragt mit dem freien Endbereich 17 über die mineralische Außenschicht 31 hinaus. Die mineralische Außenschicht 31 kann insofern beim Auftragen an den Fassadenanker 1 angeputzt werden, ohne dass die in den Fassadenanker 1 geführte Ringschraube 11 beim Verputzen verschmutzt wird beziehungsweise an die Außenschicht 31 anhaftet.

Nach der Herstellung des die Dämmplatten 29, die Gewebeschicht 30 und die mineralische Außenschicht 31 umfassenden Wärmedämmverbundsystems kann die Ringschraube 11 aus dem Fassadenanker 1 entfernt werden. Da die mineralische Außenschicht 31 nur bis an den freien Endbereich 17 der Hülse 3 herangeführt ist und kein Kontakt zwischen der Ringschraube 11 und der mineralischen Außenschicht 31 ausgebildet ist, kann die Ringschraube 11 aus dem Fassadenanker 1 herausgeschraubt werden, ohne dass es zu einer Beschädigung der neu hergestellten mineralischen Außenschicht 31 kommt. Der freie Endbereich 17 dient insofern als eine Art Verschmutzungsschutz für die Ringschraube 11. Der Fassadenanker 1 verbleibt hierbei dauerhaft in der Gebäudewand 2.

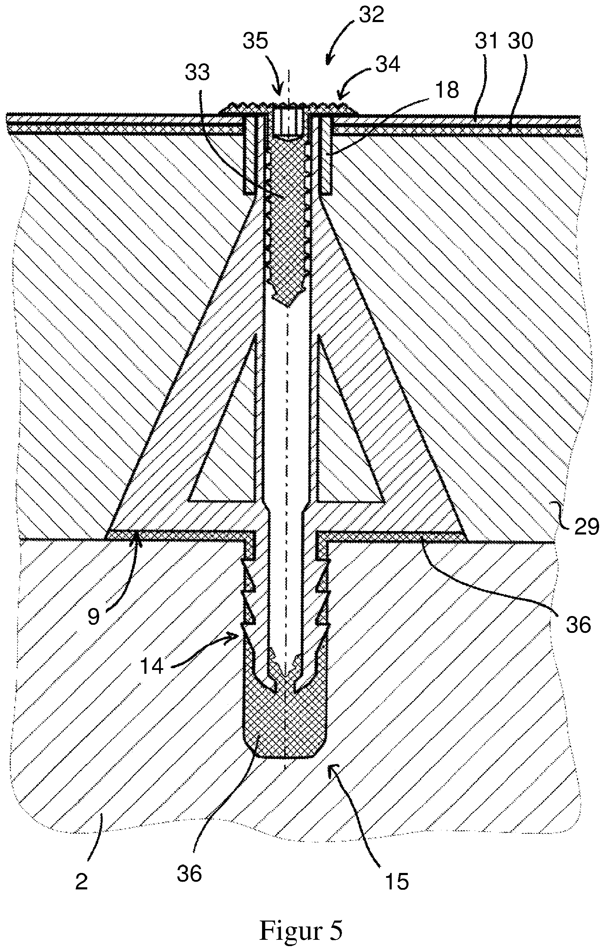

Wie in Figur 5 dargestellt kann die Aufnahme 8 der Hülse 3 durch einen Verschlusskörper 32 verschlossen werden, wenn die Ringschraube 11 entfernt ist. Der Verschlusskörper 32 kann beispielsweise einen in die Aufnahme 8 einschraubbaren Gewindeschaft 33 und einen die Hülse 3 im Bereich der Stirnseite 28 vollständig überdeckenden Kopfabschnitt 34 aufweisen. Der Kopfabschnitt 34 kann eine genarbte beziehungsweise anderweitig strukturierte Oberfläche besitzen, welche in erster Näherung der Oberflächenbeschaffenheit der mineralischen Außenschicht 31 angenähert ist. Zusätzlich kann in dem Verschlusskörper 32 ein Konus 35 zum Einsetzen eines Werkzeugs oder eine andersartige Werkzeugaufnahme vorgesehen sein. Hierdurch kann der Verschlusskörper 32 wiederholt in die Aufnahme 8 eingesetzt beziehungsweise entnommen werden. Optional kann vorgesehen sein, dass an dem freien Endbbereich 17 und/oder dem Stützabschnitt 5 der Hülse 3 ein Innengewinde ausgebildet ist zum Führen des Gewindeschafts 33 des Verschlusskörpers 32. Vorteilhaft wird überdies vorgesehen, dass der Fassadenanker 1 vor dem Einsetzen des Verschlusskörpers 32 in den freien Endbereich 17 so abgelängt wird, dass die Stirnseite 28 im Wesentlichen flächenbündig zu der mineralischen Außenschicht 31 beziehungsweise geringfügig versetzt hierzu angeordnet ist. Zudem kann die Papierhülse 19 nach dem Auskleiden der Gebäudewand 2 mit den Dämmplatten 29 beziehungsweise der Herstellung der mineralischen Außenschicht 31 entfernt werden, sodass der Elastomerring 18 expandiert und den Fassadenanker 1 zu der Dämmung hin abdichtet.

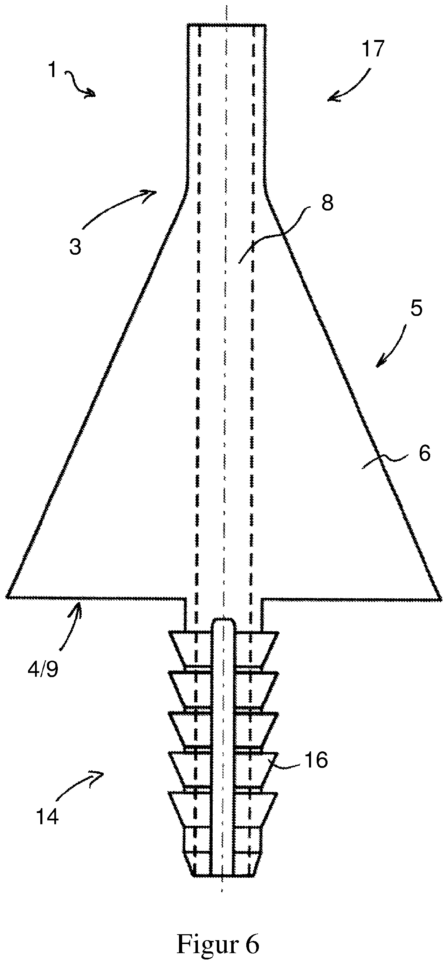

Figur 6 zeigt eine weitere Ausführungsform eines erfindungsgemäßen Fassadenankers 1. Hierbei sind an dem Fassadenanker 1 der Stützabschnitt 5, das Spreizelement 14 und der freie Endbereich 17 ausgebildet. Im Stützabschnitt 5 ist als Stützelement ein Kegel 6 geformt. Der Stützkegel 6 definiert zugleich das Anlageelement 4 mit der Stützfläche 9. Der Stützkegel 6 kann beispielsweise als ein Hohlkegel mit konstanter oder variabler Mantelstärke ausgebildet sein.

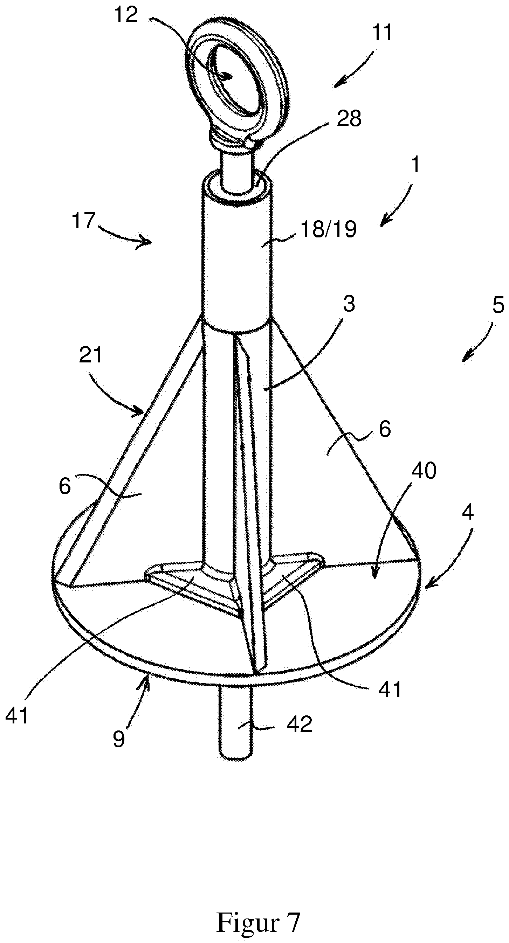

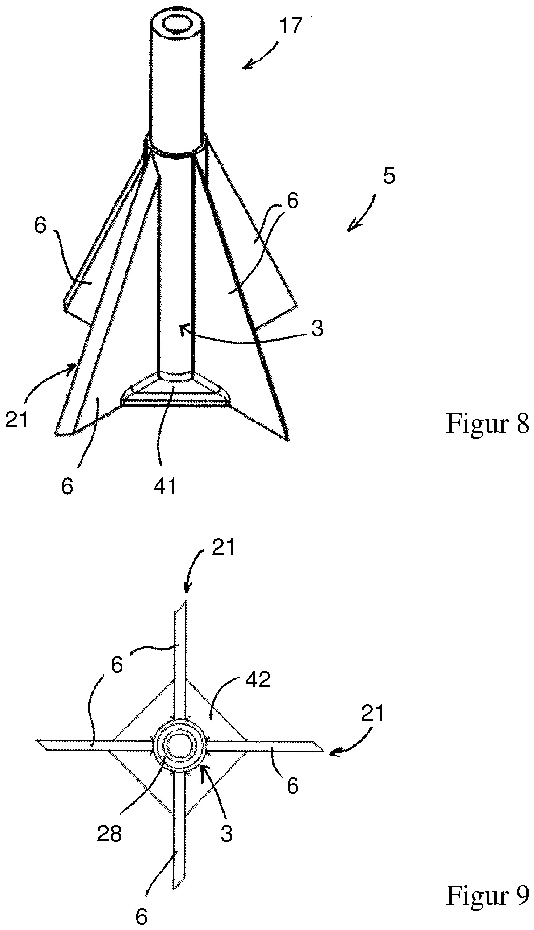

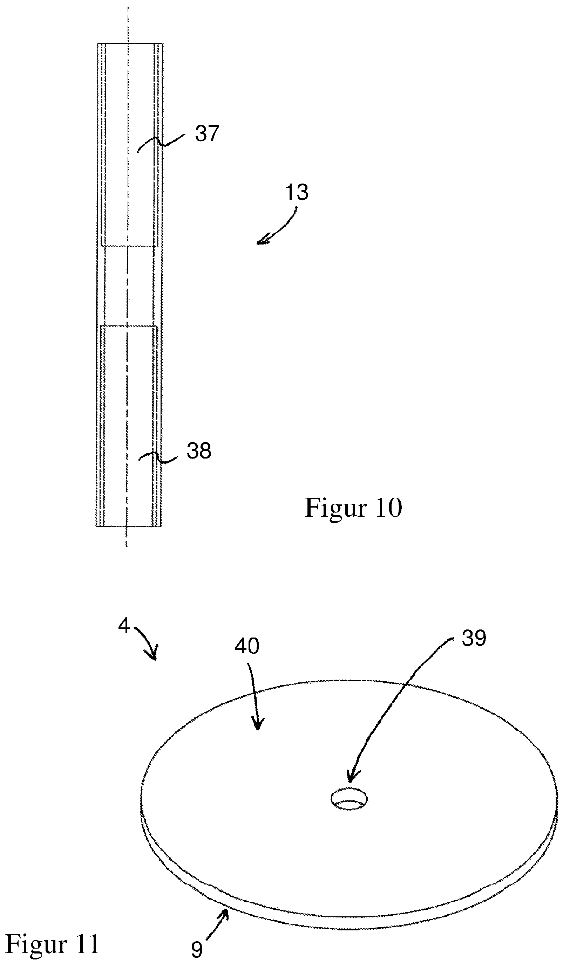

Eine dritte Ausführungsform eines Fassadenankers 1 ist in den Figuren 7 bis 11 dargestellt. Es handelt sich um einen mehrteiligen Fassadenanker 1, welcher als wesentliche Bauteile die Hülse 3 mit den radial abragenden Stützrippen 6 und ein Anlageelement 4 mit der Stützfläche 9 aufweist. Zusätzlich ist als Teil des Fassadenankers 1 ein Gewindeeinsatz 13 vorgesehen, welcher in der Hülse 3 vorgesehen ist und die Aufnahme 8 bildet. An dem Gewindeeinsatz 13 ist beidseits ein Gewinde 37, 38 vorgesehen.

An der Hülse 3 ist im Bereich des Übergangs zwischen dem freien Endbereich 17 und dem Stützabschnitt 5 eine Stufe ausgebildet, wobei ein Außendurchmesser der Hülse 3 im Bereich des freien Endbereichs 17 geringer ist als ein Außendurchmesser der Hülse 3 im Stützabschnitt 5. Die Stufung ist vorgesehen, um einen im Wesentlichen gleichen Außendurchmesser für den Fassadenanker 1 nach Ansetzen des komprimierten elastischen Körpers 18 mit der Papierhülse 19 im Bereich des freien Endes 17 zu erreichen.

Das Anlageelement 4 ist insbesondere scheibenförmig ausgebildet und weist eine konzentrische Bohrung 39 auf. Eine erste Flachseite des Anlageelements 4 definiert die Stützfläche 9. Im montierten Zustand des Fassadenankers 1 ist eine zweite Flachseite 40 des Anlageelements 4 stirnseitig an die Hülse 3 und eine dem Anlageelement 4 zugewandte Unterseite der Stützrippen 6 angelegt. Zwischen den Stützrippen 6 erstrecken sich Verbindungsabschnitte 41, welche ebenfalls eine flache Unterseite aufweisen, die an die Flachseite 40 des Anlageelements 4 angesetzt wird.

Im montierten Zustand des Fassadenankers 1 ist insbesondere über den freien Endbereich 17 eine Ringschraube 11 in die Aufnahme 8 eingesetzt und in einem ersten Gewinde 37 des Gewindeeinsatzes 13 festgelegt. In das zweite Gewinde 38 des Gewindeeinsatzes 13 ist ein Gewindebolzen als Befestigungsmittel 42 eingesetzt. Beispielsweise sind der Gewindeeinsatz 13 sowie das Befestigungsmittel 42 aus einem metallischen Werkstoff hergestellt. Die Hülse 3 mit den abragenden Stützrippen 6 ist beispielsweise aus Kunststoff gefertigt, wobei die Hülse 3 im freien Endbereich 17 aus einem weichen Kunststoffmaterial hergestellt ist und wobei die Hülse 3 im Bereich des Stützabschnitts 5 und der Stützrippen 6 aus einem verstärkten Kunststoffmaterial, beispielsweise aus einem glasfaserverstärkten Kunststoffmaterial, hergestellt ist. Die Ringschraube 11 ist bevorzugt ebenfalls aus einem metallischen Werkstoff hergestellt. Beispielsweise wird der Gewindeeinsatz 13 beim Herstellen der Hülse 3 mit Kunststoff umspritzt.

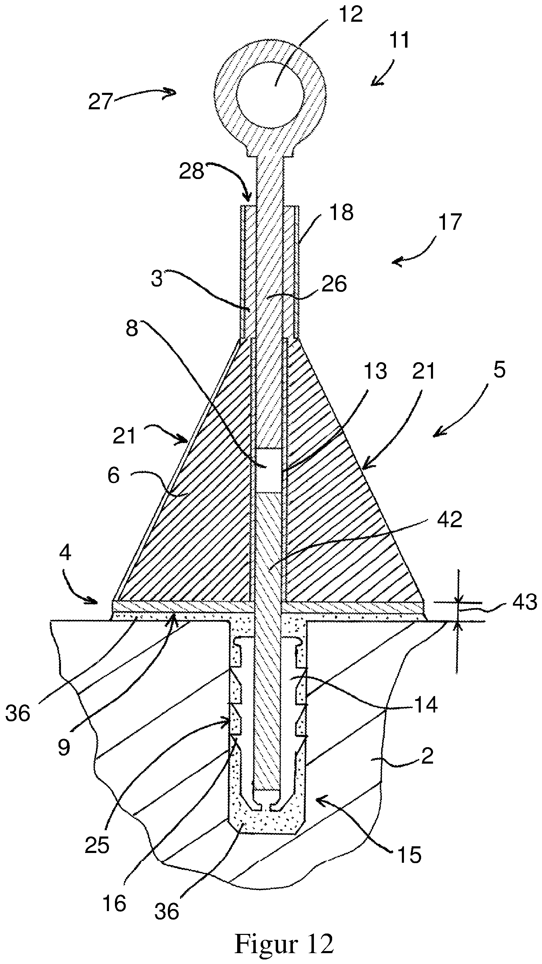

Eine erfindungsgemäße Bauanordnung mit dem Fassadenanker 1 nach dem dritten Ausführungsbeispiel ist in Figur 12 dargestellt. Eine in einer Gebäudewand 2 vorgesehene Ausnehmung 15 dient zur Aufnahme eines Dübels als Spreizelement 14. Zusätzlich ist der Fassadenanker 1 mit der Stützfläche 9 voran an die Gebäudewand 2 angelegt. Zum Ausgleich von Unebenheiten insbesondere in der Gebäudewand 2 ist zwischen der Gebäudewand 2 einerseits und der Stützfläche 9 des Fassadenankers 1 andererseits die Ausgleichsmasse 36 vorgesehen. Die Ausgleichsmasse 36 ist des Weiteren in der Ausnehmung 15 vorgesehen. Durch das Vorsehen der Ausgleichsmasse 36 wird eine flächige Abstützung des Fassadenankers 1 an der Gebäudewand 2 erreicht und die Festlegung des Spreizelements 14 in der Ausnehmung 15 verbessert. Eine weitere Festlegung erfolgt über das Befestigungsmittel 34, welches zum einen in dem Gewinde 38 des Gewindeeinsatzes 13 und zum anderen in dem Spreizelement 14 festgelegt ist. In dem ersten Gewinde 37 des Gewindeeinsatzes 13 ist die Ringschraube 11 befestigt.

Der Aufbau der Fassade erfolgt dann wie bereits dargestellt durch das Anlegen von Dämmplatten 29 an die Gebäudewand 2 beziehungsweise den Fassadenanker 1, durch das Vorsehen einer mineralischen Außenschicht 31, durch das Einlängen des Fassadenankers 1 im Bereich des freien Endbereichs 17 und das Einsetzen des Verschlusskörpers 32 in die Aufnahme 8 der Hülse 3. Insbesondere ist eine Dicke 43 des Anlageelements 4 und der zwischen dem Anlageelement 4 und der Gebäudewand 2 vorgesehenen Ausgleichsmasse 36 so gewählt, dass ein Ausklinken der Dämmplatten 29 nicht erforderlich ist. Die Dicke 43 ist bevorzugt geringer als 15 mm und besonders bevorzugt nicht größer als 10 mm.

Gleiche Bauteile und Bauteilfunktionen sind mit gleichen Bezugszeichen gekennzeichnet.

## Patentansprüche

1. Bauanordnung zum Festlegen eines Gerüsts an einer Gebäudewand (2) umfassend
- die Gebäudewand (2) mit einer Ausnehmung (15),
- einen an der Gebäudewand (2) festgelegten Fassadenanker (1) mit einer Aufnahme (8) für mindestens ein Befestigungsmittel (11, 42) und
- das Befestigungsmittel (11, 42), welches in die Aufnahme (8) des Fassadenankers (1) einerseits und in die Ausnehmung (15) andererseits eingreift,
wobei der Fassadenanker (1) eine der Gebäudewand (2) zugewandte Stützfläche (9) vorsieht, wobei zwischen der Stützfläche (9) und der Gebäudewand (2) eine Ausgleichsmasse (36) vorgesehen ist derart, dass mittelbar über die Ausgleichsmasse (36) eine flächige Anlage und Abstützung des Fassadenankers (1) an der Gebäudewand (2) realisiert ist, wobei der Fassadenanker (1) mehrteilig ausgebildet ist derart, dass ein Anlageelement (4) mit der Stützfläche (9) und eine die Aufnahme (8) für das Befestigungsmittel (11, 42) aufweisende Hülse (3) separat ausgeführt sind, und wobei die Hülse (3) im Wesentlichen senkrecht zu der Stützfläche (9) langgestreckt ausgebildet ist, **dadurch gekennzeichnet, dass** die Hülse (3) einen freien Endbereich (17) mit einer Mantelfläche sowie einen Stützabschnitt (5) aufweist und dass im Bereich des Stützabschnitts (5) Stützrippen (6) von der Hülse (3) abragen.

2. Bauanordnung nach Anspruch 1, **dadurch gekennzeichnet, dass** die Ausgleichsmasse (36) aus einem aushärtbaren Material gebildet ist.

3. Bauanordnung nach Anspruch 1 oder 2, **dadurch gekennzeichnet, dass** die Ausgleichsmasse (36) aus einem druckstabilen Material gebildet ist.

4. Bauanordnung nach einem der Ansprüche 1 bis 3, **dadurch gekennzeichnet, dass** die Ausgleichsmasse (36) durch das Fügen von zwei Materialkomponenten bereitgestellt ist.

5. Bauanordnung nach einem der Ansprüche 1 bis 4, **dadurch gekennzeichnet, dass** die Hülse (3) in dem freien Endbereich (17) eine zylindrische Mantelform aufweist.

6. Bauanordnung nach einem der Ansprüche 1 bis 5, **dadurch gekennzeichnet, dass** die Hülse (3) in dem freien Endbereich (17) mantelseitig jedenfalls abschnittsweise von einem elastischen Körper (Elastomerring 18) mit einem veränderbaren Volumen und bevorzugt variablen Außenabmessungen umgeben ist.

7. Bauanordnung nach Anspruch 6, **dadurch gekennzeichnet, dass** als elastischer Körper ein Elastomerring (18) vorgesehen ist und/oder dass der elastische Körper als Dichtkörper ausgebildet ist.

8. Bauanordnung nach einem der Ansprüche 1 bis 7, **dadurch gekennzeichnet, dass** die Stützrippen (6) radial von der Hülse (3) abragen.

9. Bauanordnung nach einem der Ansprüche 1 bis 8, **dadurch gekennzeichnet, dass** an den Stützrippen (6) freie Randkanten (21) gebildet sind, welche zumindest abschnittsweise messerklingenartig ausgebildet sind mit einer sich in Richtung der Randkante (21) verjüngenden Dickenabmessung.

10. Bauanordnung nach einem der Ansprüche 1 bis 9, **dadurch gekennzeichnet, dass** zum Festlegen des Fassadenankers (1) an der Gebäudewand (2) ein Spreizelement (14) vorgesehen ist, welches in die Ausnehmung (15) eingesetzt ist, und dass das Befestigungsmittel (11, 42) in das Spreizelement (14) eingesetzt ist zum Festlegen des Fassadenankers (1) an der Gebäudewand (2).

11. Bauanordnung nach einem der Ansprüche 1 bis 10, **dadurch gekennzeichnet, dass** eine Ringschraube (11) als Verbindungsmittel für das Gerüst vorgesehen ist, wobei im Bereich einer Öse (12) der Ringschraube (11) das Gerüst festlegbar ist und wobei das Verbindungsmittel (11) in die Aufnahme (8) des Fassadenankers (1) eingesetzt ist.

12. Bauanordnung nach einem der Ansprüche 1 bis 11, **dadurch gekennzeichnet, dass** das Verbindungsmittel (11) zugleich als Befestigungsmittel (11) dient, wobei das Verbindungsmittel (11) in die Aufnahme (8) und das Spreizelement (14) eingesetzt ist.

13. Bauanordnung nach einem der Ansprüche 1 bis 12, **dadurch gekennzeichnet, dass** an der Hülse (3) ein Gewinde (37) zum Festlegen des zweiten Verbindungsmittels (11) und/oder ein Gewinde (38) zum Festlegen des Befestigungsmittels (42) vorgesehen sind.

14. Bauanordnung nach einem der Ansprüche 1 bis 13, **dadurch gekennzeichnet, dass** der Fassadenanker (1) aus unterschiedlichen Materialien hergestellt ist.

15. Bauanordnung nach einem der Ansprüche 1 bis 14, **dadurch gekennzeichnet, dass** der freie Endbereich (17) der Hülse (3) aus einem ersten Material hergestellt ist und dass der Stützbereich der Hülse (3) und/oder die Stützrippen (6) und/oder das Anlageelement (4) aus einem zweiten Material gefertigt sind, welches eine höhere Festigkeit aufweist als das weiche Material.

16. Bauanordnung nach einem der Ansprüche 1 bis 15, **dadurch gekennzeichnet, dass** das Anlageelement (4) aus einem metallischen Werkstoff gebildet ist.

17. Bauanordnung nach einem der Ansprüche 1 bis 16, **dadurch gekennzeichnet, dass** der Stützabschnitt (5) der Hülse (3) und/oder die Stützrippen (6) aus einem faserverstärkten Kunststoff gebildet sind.

18. Verfahren zum wenigstens temporären Festlegen eines Gerüsts an einer Gebäudewand (2) umfassend die folgenden Schritte:
- in der Gebäudewand (2) wird eine Ausnehmung (15) ausgebildet;
- in die Ausnehmung (15) wird ein Spreizelement (14) eingesetzt;
- auf die Gebäudewand (2) wird im Bereich der Ausnehmung (15) und insbesondere die Ausnehmung (15) umgebend eine Ausgleichsmasse (36) aufgetragen;
- ein Fassadenanker (1) wird mit einer Stützfläche (9) voran an die Ausgleichsmasse (36) angelegt;
- der Fassadenanker (1) wird über ein Befestigungsmittel (11, 42) an der Gebäudewand (2) festgelegt, wobei das Befestigungsmittel (11, 42) in einer Aufnahme (8) des Fassadenankers (1) und in das Spreizelement (14) eingesetzt wird,
**dadurch gekennzeichnet, dass** an die Gebäudewand (2) flächig eine Dämmung angesetzt wird, wobei eine Dicke der Dämmung so gewählt wird, dass der Fassadenanker (1) mit einem der Stützfläche (9) abgewandten freien Endbereich (17) jedenfalls abschnittsweise aus der Dämmung herausragt.

19. Verfahren nach Anspruch 18, **dadurch gekennzeichnet, dass** nach dem Herstellen der Dämmung auf die Dämmung eine mineralische Außenschicht (31) aufgebracht und dass die mineralische Außenschicht (31) an den freien Endbereich (17) des Fassadenankers (1) angeputzt wird.

20. Verfahren nach Anspruch 18 oder 19, **dadurch gekennzeichnet, dass** beim Rückbau des Gerüsts die Ringschraube (11) aus der Aufnahme (8) des Fassadenankers (1) entfernt wird und der Fassadenanker (1) durch Zuschneiden im Bereich des freien Endbereichs (17) flächenbündig mit der mineralischen Außenschicht (31) eingekürzt wird.

21. Verfahren nach einem der Ansprüche 18 bis 20, **dadurch gekennzeichnet, dass** ein Verschlusskörper (32) in die Aufnahme des Fassadenankers (1) eingesetzt wird, wobei der Verschlusskörper (32) randseitig auf die mineralische Außenschicht (31) ragt.

22. Verfahren nach einem der Ansprüche 18 bis 21, **dadurch gekennzeichnet, dass** die Ausgleichsmasse (36) zusätzlich in die Ausnehmung (15) eingebracht wird.

23. Verfahren nach einem der Ansprüche 18 bis 22 **dadurch gekennzeichnet, dass** in die Aufnahme (8) des Fassadenankers (1) ein Verbindungsmittel (11) zum Festlegen des Gerüsts eingesetzt wird.

## Claims

1. Structural arrangement for securing a scaffold to a building wall (2), comprising
- the building wall (2) with a recess (15),
- a facade anchor (1) which is secured to the building wall (2) and has a receptacle (8) for at least one fastening means (11, 42), and
- the fastening means (11, 42) which engages on the one hand into the receptacle (8) of the facade anchor (1) and on the other hand into the recess (15),
wherein the facade anchor (1) provides a support surface (9) facing the building wall (2), wherein between the support surface (9) and the building wall (2) a levelling compound (36) is provided such that a planar contact and support of the facade anchor (1) on the building wall (2) is achieved indirectly via the levelling compound (36), wherein the facade anchor (1) is formed of multiple parts such that a contact element (4) with the support surface (9) and a sleeve (3) having the receptacle (8) for the fastening means (11, 42) are formed separately, and wherein the sleeve (3) is formed elongated substantially perpendicular to the support surface (9), **characterised in that** the sleeve (3) has a free end region (17) with a circumferential surface and a support portion (5) and **in that** in the region of the support portion (5) support ribs (6) protrude from the sleeve (3).

2. Structural arrangement as claimed in claim 1, **characterised in that** the levelling compound (36) is formed from a curable material.

3. Structural arrangement as claimed in claim 1 or 2, **characterised in that** the levelling compound (36) is formed from a pressure-stable material.

4. Structural arrangement as claimed in any one of claims 1 to 3, **characterised in that** the levelling compound (36) is provided by the joining of two material components.

5. Structural arrangement as claimed in any one of claims 1 to 4, **characterised in that** the sleeve (3) in the free end region (17) has a cylindrical circumferential shape.

6. Structural arrangement as claimed in any one of claims 1 to 5, **characterised in that** the sleeve (3) in the free end region (17) is surrounded on the circumferential side at least in sections by an elastic body (elastomer ring 18) having a changeable volume and preferably variable external dimensions.

7. Structural arrangement as claimed in claim 6, **characterised in that** an elastomer ring (18) is provided as an elastic body and/or **in that** the elastic body is designed as a sealing body.

8. Structural arrangement as claimed in any one of claims 1 to 7, **characterised in that** the support ribs (6) protrude radially from the sleeve (3).

9. Structural arrangement as claimed in any one of claims 1 to 8, **characterised in that** the support ribs (6) have free marginal edges (21) formed thereon which are formed at least in sections in the manner of a knife blade with a thickness dimension which tapers in the direction of the marginal edge (21).

10. Structural arrangement as claimed in any one of claims 1 to 9, **characterised in that** for the purpose of securing the façade anchor (1) to the building wall (2) an expansion element (14) is provided which is inserted into the recess (15), and **in that** the fastening means (11, 42) is inserted into the expansion element (14) for the purpose of securing the façade anchor (1) to the building wall (2).

11. Structural arrangement as claimed in any one of claims 1 to 10, **characterised in that** an eyebolt (11) is provided as the connection means for the scaffold, wherein the scaffold can be secured in the region of an eyelet (12) of the eyebolt (11) and wherein the connection means (11) is inserted into the receptacle (8) of the façade anchor (1).

12. Structural arrangement as claimed in any one of claims 1 to 11, **characterised in that** the connection means (11) is used simultaneously as the fastening means (11), wherein the connection means (11) is inserted into the receptacle (8) and the expansion element (14).

13. Structural arrangement as claimed in any one of claims 1 to 12, **characterised in that** a thread (37) is provided on the sleeve (3) for securing the second connection means (11) and/or a thread (38) is provided on the sleeve (3) for securing the fastening means (42).

14. Structural arrangement as claimed in any one of claims 1 to 13, **characterised in that** the façade anchor (1) is formed from different materials.

15. Structural arrangement as claimed in any one of claims 1 to 14, **characterised in that** the free end region (17) of the sleeve (3) is produced from a first material and **in that** the support region of the sleeve (3) and/or the support ribs (6) and/or the contact element (4) are manufactured from a second material which has a higher strength than the soft material.

16. Structural arrangement as claimed in any one of claims 1 to 15, **characterised in that** the contact element (4) is formed from a metallic material.

17. Structural arrangement as claimed in any one of claims 1 to 16, **characterised in that** the support portion (5) of the sleeve (3) and/or the support ribs (6) are formed from a fibre-reinforced synthetic material.

18. Method for at least temporarily securing a scaffold to a building wall (2) comprising the following steps:
- a recess (15) is formed in the building wall (2);
- an expansion element (14) is inserted into the recess (15);
- a levelling compound (36) is applied onto the building wall (2) in the region of the recess (15) and in particular surrounding the recess (15);
- a façade anchor (1) is applied with a support surface (9) at the front against the levelling compound (36);
- the façade anchor (1) is secured to the building wall (2) via a fastening means (11, 42), wherein the fastening means (11, 42) is inserted into a receptacle (8) of the façade anchor (1) and into the expansion element (14),
**characterised in that** an insulation material is attached to the surface of the building wall (2), wherein a thickness of the insulation material is selected such that the façade anchor (1) protrudes, with a free end region (17) facing away from the support surface (9), at least in sections from the insulation material.

19. Method according to claim 18, **characterised in that** after the production of the insulation material, a mineral outer layer (31) is applied onto the insulation material, and **in that** the mineral outer layer (31) is also plastered to the free end region (17) of the façade anchor (1).

20. Method as claimed in claim 18 or 19, **characterised in that** when dismantling the scaffold, the eyebolt (11) is removed from the receptacle (8) of the façade anchor (1) and the façade anchor (1) is shortened so as to be flush with the mineral outer layer (31) by trimming in the region of the free end region (17).

21. Method as claimed in any one of claims 18 to 20, **characterised in that** a closure body (32) is inserted into the receptacle of the façade anchor (1), wherein the closure body (32) projects on the edge side onto the mineral outer layer (31).

22. Method as claimed in any one of claims 18 to 21, **characterised in that** the levelling compound (36) is additionally introduced into the recess (15).

23. Method as claimed in any one of claims 18 to 22, **characterised in that** a connection means (11) for securing the scaffold is inserted into the receptacle (8) of the façade anchor (1).

## Revendications

1. Agencement de construction pour fixer un échafaudage à un mur de bâtiment (2), comprenant :
- le mur de bâtiment (2) avec un évidement (15),
- un ancrage de façade (1) fixé au mur de bâtiment (2) avec un logement (8) pour au moins un moyen de fixation (11, 42) et
- le moyen de fixation (11, 42) qui s'engage dans le logement (8) de l'ancrage de façade (1) d'une part et dans l'évidement (15) d'autre part,
dans lequel l'ancrage de façade (1) présente une surface d'appui (9) tournée vers le mur de bâtiment (2), dans lequel une pâte d'égalisation (36) est prévue entre la surface d'appui (9) et le mur de bâtiment (2) de telle sorte qu'indirectement, par l'intermédiaire de la pâte d'égalisation (36), un contact plat et un appui de l'ancrage de façade (1) contre le mur de bâtiment (2) sont réalisés, dans lequel l'ancrage de façade (1) est conçu en plusieurs parties de telle sorte qu'un élément de contact (4) avec la surface d'appui (9) et une douille (3) présentant le logement (8) pour le moyen de fixation (11, 42) sont réalisés séparément, et dans lequel la douille (3) est conçue allongée sensiblement perpendiculairement à la surface d'appui (9), **caractérisé en ce que** la douille (3) présente une zone d'extrémité libre (17) avec une surface extérieure ainsi qu'une partie d'appui (5) et que des nervures d'appui (6) font saillie de la douille (3) au niveau de la partie d'appui (5).

2. Agencement de construction selon la revendication 1, **caractérisé en ce que** la pâte d'égalisation (36) est formée d'un matériau durcissable.

3. Agencement de construction selon la revendication 1 ou 2, **caractérisé en ce que** la pâte d'égalisation (36) est formée d'un matériau stable à la pression.

4. Agencement de construction selon l'une des revendications 1 à 3, **caractérisé en ce que** la pâte d'égalisation (36) est réalisée par l'assemblage de deux composants de matériau.

5. Agencement de construction selon l'une des revendications 1 à 4, **caractérisé en ce que** la douille (3) présente une forme extérieure cylindrique dans la zone d'extrémité libre (17).

6. Agencement de construction selon l'une des revendications 1 à 5, **caractérisé en ce que**, dans la zone d'extrémité libre (17), la douille (3) est entourée du côté extérieur, au moins sur certaines parties, par un corps élastique (bague en élastomère 18) ayant un volume variable et de préférence des dimensions extérieures variables.

7. Agencement de construction selon la revendication 6, **caractérisé en ce qu'**une bague en élastomère (18) est prévue comme corps élastique et/ou que le corps élastique est conçu comme corps d'étanchéité.

8. Agencement de construction selon l'une des revendications 1 à 7, **caractérisé en ce que** les nervures d'appui (6) font saillie radialement de la douille (3).

9. Agencement de construction selon l'une des revendications 1 à 8, **caractérisé en ce que** des bords extérieurs libres (21) sont formés sur les nervures d'appui (6), lesquels sont conçus, au moins sur certaines parties, à la manière de lames de couteau avec une dimension d'épaisseur se réduisant en direction du bord extérieur (21).

10. Agencement de construction selon l'une des revendications 1 à 9, **caractérisé en ce que**, pour la fixation de l'ancrage de façade (1) au mur de bâtiment (2), il est prévu un élément d'expansion (14) qui est inséré dans l'évidement (15) et que le moyen de fixation (11, 42) est inséré dans l'élément d'expansion (14) pour fixer l'ancrage de façade (1) au mur de bâtiment (2).

11. Agencement de construction selon l'une des revendications 1 à 10, **caractérisé en ce qu'**une vis à anneau (11) est prévue comme moyen de liaison pour l'échafaudage, l'échafaudage pouvant être fixé au niveau d'un œillet (12) de la vis à anneau (11) et le moyen de liaison (11) étant inséré dans le logement (8) de l'ancrage de façade (1).

12. Agencement de construction selon l'une des revendications 1 à 11, **caractérisé en ce que** le moyen de liaison (11) sert en même temps de moyen de fixation (11), le moyen de liaison (11) étant inséré dans le logement (8) et l'élément d'expansion (14).

13. Agencement de construction selon l'une des revendications 1 à 12, **caractérisé en ce qu'**un filetage (37) pour la fixation du deuxième moyen de liaison (11) et/ou un filetage (38) pour la fixation du moyen de fixation (42) sont prévus sur la douille (3).

14. Agencement de construction selon l'une des revendications 1 à 13, **caractérisé en ce que** l'ancrage de façade (1) est constitué de différents matériaux.

15. Agencement de construction selon l'une des revendications 1 à 14, **caractérisé en ce que** la zone d'extrémité libre (17) de la douille (3) est constituée d'un premier matériau et que la zone d'appui de la douille (3) et/ou les nervures d'appui (6) et/ou l'élément de contact (4) sont constitués d'un deuxième matériau qui présente une résistance supérieure à celle du matériau souple.

16. Agencement de construction selon l'une des revendications 1 à 15, **caractérisé en ce que** l'élément de contact (4) est formé d'un matériau métallique.

17. Agencement de construction selon l'une des revendications 1 à 16, **caractérisé en ce que** la partie de support (5) de la douille (3) et/ou les nervures d'appui (6) sont formées d'une matière plastique renforcée par des fibres.

18. Procédé pour fixer au moins temporairement un échafaudage à un mur de bâtiment (2), comprenant les étapes suivantes:
- un évidement est formé dans le mur de bâtiment (2);
- un élément d'expansion (14) est inséré dans l'évidement (15);
- une pâte d'égalisation (36) est appliquée sur le mur de bâtiment (2) dans la zone de l'évidement (15) et en particulier autour de l'évidement (15);
- un ancrage de façade (1) est placé sur la pâte d'égalisation (36) avec une surface d'appui (9) en avant;
- l'ancrage de façade (1) est fixé au mur de bâtiment (2) à l'aide d'un moyen de fixation (11, 42), le moyen de fixation (11, 42) étant inséré dans un logement (8) de l'ancrage de façade (1) et dans l'élément d'expansion (14),
**caractérisé en ce qu'**une isolation est appliquée de manière plane sur le mur de bâtiment (2), une épaisseur de l'isolation étant choisie de telle sorte que l'ancrage de façade (1) dépasse de l'isolation, au moins sur certaines parties, par une zone d'extrémité libre (17) opposée à la surface d'appui (9).

19. Procédé selon la revendication 18, **caractérisé en ce que**, après la réalisation de l'isolation, une couche extérieure minérale (31) est appliquée sur l'isolation et que la couche extérieure minérale (31) est enduite sur la zone d'extrémité libre (17) de l'ancrage de façade (1).

20. Procédé selon la revendication 18 ou 19, **caractérisé en ce que**, lors du démontage de l'échafaudage, la vis à anneau (11) est retirée du logement (8) de l'ancrage de façade (1) et l'ancrage de façade (1) est raccourci par découpe au niveau de la zone d'extrémité libre (17), au ras de la surface de la couche extérieure minérale (31).

21. Procédé selon l'une des revendications 18 à 20, **caractérisé en ce qu'**un corps de fermeture (32) est inséré dans le logement de l'ancrage de façade (1), le corps de fermeture (32) dépassant de la couche extérieure minérale (31) sur les bords.

22. Procédé selon l'une des revendications 18 à 21, **caractérisé en ce que** la pâte d'égalisation (36) est en outre introduite dans l'évidement (15).

23. Procédé selon l'une des revendications 18 à 22, **caractérisé en ce qu'**un moyen de liaison (11) pour la fixation de l'échafaudage est inséré dans le logement (8) de l'ancrage de façade (1).
